# FASCICULE DE BREVET EUROPEEN

(11) **EP 0 600 790 B1**
(45) Date de publication et mention de la délivrance du brevet: **30.08.1995**
(21) Numéro de dépôt: 93402904.2
(22) Date de dépôt: 30.11.1993
(51) Int. Cl.: B23K 26/00, B23K 15/00

(54) **Procédé de fabrication de tôles plaquées et tôles plaquées à liaison par lignes de soudure**
Verfahren zur Herstellung plattierter Bleche und plattierte Bleche, die über Schweisszeilen verbunden sind
Procedure for the fabrication of plated metal plates and plated metal plates joined by welding in lines

(30) Priorité: 30.11.1992 FR 9214403
(43) Date de publication de la demande: 08.06.1994
(73) Titulaire: SOLLAC, 92800 Puteaux (FR)
(72) Inventeur: Peru, Gilles, F-59240 Dunkerque (FR); Claeys, Joel, F-59380 Socx (FR)
(74) Mandataire: Lanceplaine, Jean-Claude

(56) Documents cités:
- EP-A- 0 126 547
- WO-A-91/02621
- PATENT ABSTRACTS OF JAPAN vol. 8, no. 80 (M-289) (1517) 12 Avril 1984 & JP-A-58 224 261 (TOKYO SHIBAURA DENKI K. K.) 26 Décembre 1983

## Description

La présente invention concerne la fabrication de tôles plaquées ; de telles tôles comportent un substrat, par exemple en acier, qui est recouvert d'une feuille de revêtement d'épaisseur nettement plus faible et qui constitue généralement un élément de résistance à la corrosion. On utilise ainsi des tôles plaquées constituées par une tôle d'acier recouverte d'une feuille de protection dans l'industrie chimique, dans l'industrie du pétrole et dans les échangeurs thermiques, ou dans tout élément en contact avec un matériau agressif détruisant les aciers.

Elles permettent d'éviter l'utilisation de pièces complètement réalisées en matériau résistant à ces agressions.

On utilise actuellement un certain nombre de procédés pour fabriquer des tôles plaquées.

Un premier procédé est constitué par une technique de co-laminage qui est généralement réalisée avec un substrat constitué par une tôle d'acier et comportant une feuille protectrice également en acier. On réalise tout d'abord un soudage des bords puis on chauffe l'ensemble et on le soumet à une opération de laminage.

Ce premier procédé présente l'inconvénient d'être de réalisation délicate et ses résultats ne sont pas très fiables car il se produit souvent un décollage des deux plaques.

Un autre procédé est constitué par les techniques de rechargement selon lequel on dépose sur le substrat le matériau de protection sous forme de fils ou de poudre, par exemple avec une torche à plasma. Du fait que l'état de surface n'est pas régulier, on est souvent amené à réaliser une opération ultérieure de laminage ou d'usinage.

De plus, les tôles obtenues présentent des déformations dues aux traitements thermiques.

Un troisième procédé utilisé pour fabriquer des tôles plaquées est le placage par explosion. Selon ce procédé, on dispose dans un endroit désert des plaques de grandes dimensions constituées par le substrat et la feuille de recouvrement assemblés l'un sur l'autre ; on dispose sur l'ensemble des charges importantes d'explosif et on déclenche simultanément toutes les charges d'explosif de manière que la force de l'explosion plaque les deux tôles l'une sur l'autre.

Un tel procédé est très coûteux et ne permet pas une fabrication en grandes séries ni une fabrication en continu.

L'invention a pour objet un procédé de fabrication-de tôles plaquées qui est facile à mettre en oeuvre, et, par conséquent, de prix de revient faible, qui est fiable et qui se prête à la fabrication en grandes séries et en continu.

A cet effet, l'invention a pour objet un procédé de fabrication de tôles plaquées comportant un substrat recouvert d'une feuille de revêtement d'épaisseur plus faible, procédé selon lequel on applique la feuille de revêtement sur le substrat, on les maintient en contact l'un avec l'autre et on réalise sur la surface de la feuille de revêtement des lignes de fusion dont la profondeur est au moins égale à l'épaisseur de la feuille de revêtement par application d'un faisceau à haute densité d'énergie de manière à assurer la jonction entre le substrat et la feuille de revêtement.

L'invention a aussi pour objet une tôle plaquée selon la revendication 12.

L'adhérence entre les tôles n'est pas effectuée sur l'ensemble de leurs surfaces mais seulement selon certaines lignes de contact correspondant aux lignes de fusion. Par contre, du fait que les lignes de fusion sont plus profondes que l'épaisseur de la feuille de revêtement, le contact obtenu est fiable et ne risque pas de créer de décollement.

Avantageusement, on réalise une ligne de fusion sur les bords de l'ensemble du substrat et de la feuille de revêtement.

Cette disposition permet d'éviter encore les phénomènes de décollement.

Selon un mode de réalisation de l'invention, les lignes de fusion sont réalisées dans le sens de la longueur de l'ensemble du substrat et de la feuille de revêtement.

Ceci permet d'obtenir une résistance mécanique plus importante dans une direction préférentielle de la tôle. Ceci est utilisé en particulier lorsque les tôles plaquées sont destinées à réaliser des tubes.

Selon un mode de réalisation de l'invention, les lignes de fusion sont réalisées par application d'un faisceau d'électrons.

Selon un autre mode de réalisation de l'invention, les lignes de fusion sont réalisées par application d'un faisceau d'énergie laser focalisé.

D'autres caractéristiques et avantages de l'invention ressortiront de la description qui suit d'exemples de réalisation de l'invention, en se référant aux dessins annexés sur lesquels :
- la figure 1 est une vue en coupe d'une tôle plaquée conforme à l'invention ;
- les figures 2 et 3 représentent chacune en vue de dessus une tôle plaquée conforme à la présente invention; et
- la figure 4 est un schéma explicatif d'un dispositif pour la mise en oeuvre du procédé selon l'invention.

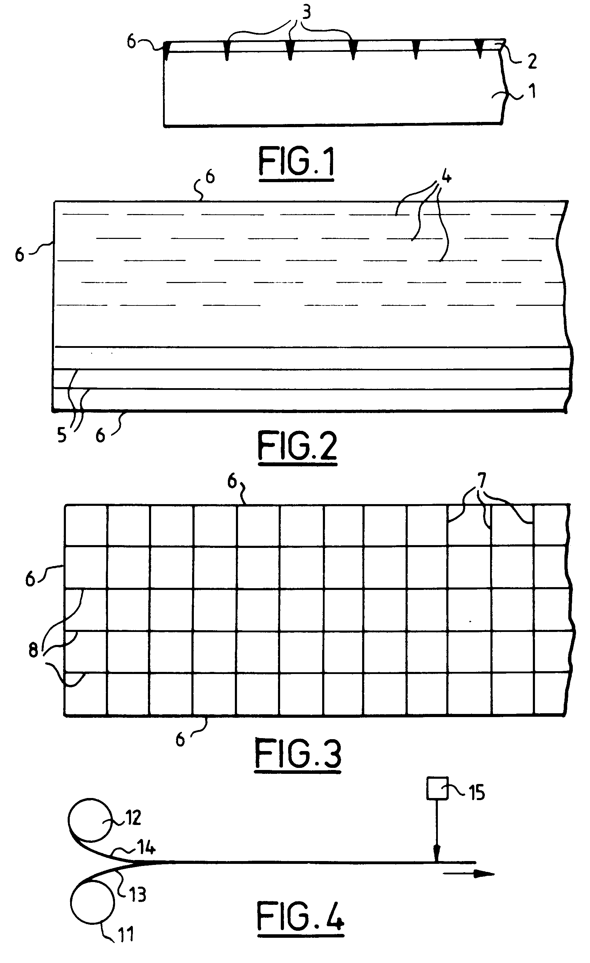

La figure 1 est une vue partielle en coupe d'une tôle plaquée conforme à la présente invention. Elle est constituée d'un substrat 1 constitué par exemple par une tôle épaisse d'acier qui est revêtu d'une feuille de revêtement 2, par exemple en acier inoxydable. L'épaisseur de la feuille de revêtement 2 qui constitue une protection du substrat 1 contre des attaques chimiques ou thermiques est beaucoup plus faible que l'épaisseur du substrat 1.

Conformément à l'invention, on réalise, par application d'un faisceau à haute densité d'énergie appliquée perpendiculairement à la surface libre de la feuille 2, des lignes de fusion 3. La densité d'énergie appliquée est telle que ces zones de fusion présentent une épaisseur supérieure à l'épaisseur de la feuille de revêtement 2.

Les deux constituants, le substrat 1 et sa feuille de revêtement 2 sont solidarisés par soudage par débouchement au niveau des lignes de fusion 3.

Comme on peut le voir sur la figure 2, les lignes de fusion peuvent être constituées par des lignes de fusion discontinues 4 disposées selon des rangées parallèles à une direction préférentielle correspondant à une caractéristique mécanique désirée particulière.

Avantageusement, les lignes de fusion 4 de deux rangées voisines sont décalées les unes par rapport aux autres de manière à obtenir une meilleure adhérence des deux composants 1 et 2.

Selon un autre mode de réalisation de l'invention, représenté en bas de la figure 2, les lignes de fusion sont des lignes continues 5 parallèles entre elles.

Avantageusement, on réalise une ligne continue de fusion sur les bords 6 de la tôle plaquée. Ceci permet d'éviter la tendance au décollage des deux composants; par ailleurs, ceci permet d'obtenir des bords de tôles non agressifs.

La figure 3 est une vue partielle de dessus d'une tôle conforme à l'invention. Dans ce mode de réalisation, les lignes de fusion sont des lignes continues 7 et 8 qui constituent un quadrillage de la feuille de revêtement. Dans ce cas également, il est avantageux que les bords 6 constituent une ligne de fusion continue.

Comme indiqué plus haut, la feuille de revêtement est une feuille de protection du substrat 1. Elle permet de protéger ce dernier contre des agressions chimiques et/ou thermiques, ce qui permet d'utiliser pour le substrat 1 des aciers de bas de gamme ne présentant pas des caractéristiques spéciales et par suite, de limiter le prix de revient de la tôle plaquée.

On peut par exemple utiliser des tôles épaisses en acier standard au carbone manganèse pour le substrat 1.

L'épaisseur de la feuille de recouvrement 2, qui peut être par exemple constituée par un acier inoxydable, est comprise entre 1 et 6 mm, cette épaisseur étant de préférence inférieure à 3 mm.

La feuille de recouvrement 2 peut être également en inconel ou en titane par exemple.

Dans le cas du mode de réalisation de la figure 2, les lignes de fusion sont toutes parallèles et dirigées suivant la longueur de la tôle. Ceci est particulièrement intéressant dans le cas où la tôle plaquée ainsi fabriquée est utilisée pour réaliser des tubes destinés par exemple à l'industrie chimique ou pétrolière ou pour réaliser des échangeurs de chaleur.

Les deux composants, le substrat 1 et la feuille de revêtement 2 doivent simplement être miscibles entre eux. Ceci permet, comme indiqué plus haut, d'utiliser des substrats de bas de gamme pour réaliser des tôles plaquées présentant une bonne résistance à la corrosion, par exemple.

Les différents paramètres du procédé selon l'invention, à savoir le niveau d'énergie appliqué sur la feuille de revêtement, la longueur, la disposition et la répartition des lignes de fusion, sont déterminés en fonction des caractéristiques désirées pour la tôle plaquée, en particulier des caractéristiques mécaniques.

L'invention concerne également des tôles plaquées comportant un substrat 1 recouvert d'une feuille de revêtement 2 dans lesquelles la liaison entre le substrat 1 et la feuille de revêtement 2 est constituée par des lignes de soudure 3-8 traversant la feuille de revêtement 2 pénétrant dans le substrat 1.

Selon un premier mode de réalisation, comme représenté dans le bas de la figure 2, les lignes de soudure 5 constituent un réseau de lignes parallèles au bord longitudinal de la tôle.

Selon un autre mode de réalisation, les lignes de soudure 7 et 8 constituent un quadrillage sur la feuille de revêtement 1, comme représenté sur la figure 3.

Selon encore une autre variante, les lignes de soudure 4 sont interrompues, comme représenté sur le haut de la figure 2.

Avantageusement, le substrat 1 de ces tôles plaquées est en acier standard.

On voit que l'invention permet de réaliser avec un faible prix de revient des tôles plaquées qui ne présentent pas le risque de décollement des deux composants.

En particulier, le fait de pouvoir utiliser des substrats en acier bas de gamme permet de réduire notablement le prix de revient.

De plus le procédé selon l'invention est facile à mettre en oeuvre. Il peut facilement être réalisé en série et en continu, comme cela est schématisé sur la figure 4 où l'on voit deux dévidoirs 11 et 12 fournissant respectivement une tôle d'acier 13 et une feuille de revêtement 14 qui sont appliquées l'une sur l'autre. L'ensemble des deux composants défile devant un ou plusieurs dispositifs 15 émettant un faisceau d'énergie à haute densité tel qu'un faisceau d'électron ou un faisceau laser.

Dans le cas où l'on veut réaliser des tôles comportant des lignes de fusion interrompues 4 comme représentées à la figure 2, on dispose plusieurs générateurs 15 selon la largeur de la tôle et on les commande de manière intermittente de façon à réaliser les lignes de fusion 4.

Les tôles plaquées obtenues présentent également l'avantage de ne pas présenter de déformations.

Par ailleurs, l'état de surface de la feuille de revêtement est suffisamment homogène pour ne pas nécessiter d'usinage ou de laminage supplémentaire.

## Revendications

1. Procédé de fabrication de tôles plaquées comportant un substrat (1) recouvert d'une feuille de revêtement (2) d'épaisseur plus faible, procédé selon lequel on applique la feuille de revêtement (2) sur le substrat (1), on les maintient en contact l'un avec l'autre et on réalise sur la surface de la feuille de revêtement (2) des lignes de fusion (3-8) dont la profondeur est au moins égale à l'épaisseur de la feuille de revêtement (2) par application d'un faisceau à haute densité d'énergie de manière à assurer la jonction entre le substrat et la feuille de revêtement.

2. Procédé selon la revendication 1, caractérisé en ce que l'on réalise une ligne de fusion (6) sur les bords de l'ensemble du substrat (1) et de la feuille de revêtement (2).

3. Procédé selon la revendication 1, caractérisé en ce que les lignes de fusion (4-5) sont réalisées dans le sens de la longueur de l'ensemble du substrat (1) et de la feuille de revêtement (2).

4. Procédé selon la revendication 1, caractérisé en ce que les lignes de fusion (7,8) réalisent un quadrillage de la feuille de revêtement (2).

5. Procédé selon la revendication 1, caractérisé en ce que l'on réalise les lignes de fusion (3-8) par application d'un faisceau d'électrons.

6. Procédé selon la revendication 1, caractérisé en ce que l'on réalise les lignes de fusion par application d'un faisceau d'énergie laser focalisé.

7. Procédé selon la revendication 1, caractérisé en ce que la feuille de revêtement (2) est en acier inoxydable.

8. Procédé selon la revendication 7, caractérisé en ce que l'épaisseur de la feuille d'acier inoxydable (2) est comprise entre 1 et 6 mm.

9. Procédé selon la revendication 8, caractérisé en ce que l'épaisseur de la feuille d'acier inoxydable est inférieure ou égale à 3 mm.

10. Procédé selon l'une quelconque des revendications précédentes, caractérisé en ce que la profondeur et la répartition des lignes de fusion (3-8) sont déterminées en fonction des caractéristiques désirées pour la tôle plaquée.

11. Procédé selon l'une quelconque des revendications précédentes, caractérisé en ce que le substrat (1) est en acier au carbone et au manganèse.

12. Tôle plaquée comportant un substrat (1) recouvert d'une feuille de revêtement (2) d'épaisseur plus faible, caractérisée en ce que la liaison entre le substrat (1) et la feuille de revêtement (2) est constituée par des lignes de soudure (3-8) traversant la feuille de revêtement (2) et pénétrant dans le substrat (1), les lignes de soudure (3-8) étant réalisées par application d'un faisceau à haute densité d'énergie.

13. Tôle plaquée selon la revendication 12, caractérisée en ce que les lignes de soudure (5) constituent un réseau de lignes parallèles au bord longitudinal de la tôle.

14. Tôle plaquée selon la revendication 12, caractérisée en ce que les lignes de soudure (7,8) constituent un quadrillage sur la feuille de revêtement.

15. Tôle plaquée selon les revendications 12 à 14, caractérisée en ce que les lignes de soudure (4) sont interrompues.

16. Tôle plaquée selon l'une des revendications 12 à 15, caractérisée en ce que le substrat (1) est en acier standard.

## Claims

1. Method for the manufacture of plated metal plates comprising a substrate (1) covered with a covering sheet (2) of smaller thickness, according to which method the covering sheet (2) is applied to the substrate (1), they are maintained in contact with one another and melt lines (3-8), the depth of which is at least equal to the thickness of the covering sheet (2), are formed on the surface of the covering sheet (2) by applying a beam having a high energy density in such a manner as to ensure that the substrate and the covering sheet are joined.

2. Method according to Claim 1,
characterised in that a melt line (6) is formed on the edges of the assembly formed by the substrate (1) and the covering sheet (2).

3. Method according to Claim 1,
characterised in that the melt lines (4, 5) are formed in the direction of the length of the assembly formed by the substrate (1) and the covering sheet (2).

4. Method according to Claim 1,
characterised in that the melt lines (7, 8) form a grid on the covering sheet (2).

5. Method according to Claim 1,
characterised in that the melt lines (3-8) are formed by applying an electron beam.

6. Method according to Claim 1,
characterised in that the melt lines are formed by applying a focused beam of laser energy.

7. Method according to Claim 1,
characterised in that the covering sheet (2) is of stainless steel.

8. Method according to Claim 7,
characterised in that the thickness of the stainless steel sheet (2) is between 1 and 6 mm.

9. Method according to Claim 8,
characterised in that the thickness of the stainless steel sheet is less than or equal to 3 mm.

10. Method according to any one of the preceding claims, characterised in that the depth and the distribution of the melt lines (3-8) are determined as a function of the characteristics desired for the plated metal plate.

11. Method according to any one of the preceding claims, characterised in that the substrate (1) is of carbon and manganese steel.

12. Plated metal plate comprising a substrate (1) covered with a covering sheet (2) of smaller thickness, characterised in that the connection between the substrate (1) and the covering sheet (2) is formed by weld lines (3-8) passing through the covering sheet (2) and penetrating into the substrate (1), the weld lines (3-8) being formed by applying a beam having a high energy density.

13. Plated metal plate according to Claim 12, characterised in that the weld lines (5) form a network of parallel lines at the longitudinal edge of the metal plate.

14. Plated metal plate according to Claim 12, characterised in that the weld lines (7, 8) form a grid on the covering sheet.

15. Plated metal plate according to Claims 12 to 14, characterised in that the weld lines (4) are interrupted.

16. Plated metal plate according to any one of Claims 12 to 15, characterised in that the substrate (1) is of standard steel.

## Patentansprüche

1. Verfahren zur Herstellung von plattierten Blechen mit einem Substrat (1), das mit einem Beschichtungsblatt (2) von geringerer Dicke überzogen ist, bei welchem Verfahren man das Beschichtungsblatt (2) auf das Substrat (1) auflegt, sie miteinander in Berührung hält und auf der Oberfläche des Beschichtungsblattes (2) mit Hilfe eines Strahls mit hoher Energiedichte Schweißlinien (3- 8) herstellt, deren Tiefe mindestens gleich der Dicke des Beschichtungsblattes (2) ist, so daß die Verbindung zwischen dem Substrat und dem Beschichtungsblatt hergestellt wird.

2. Verfahren nach Anspruch 1, dadurch gekennzeichnet, daß man eine Schweißlinie (6) an den Rändern der Einheit aus Substrat (1) und Beschichtungsblatt (2) herstellt.

3. Verfahren nach Anspruch 1, dadurch gekennzeichnet, daß die Schweißlinien (4 - 5) in Längsrichtung der Einheit aus Substrat (1) und Beschichtungsblatt (2) ausgebildet werden.

4. Verfahren nach Anspruch 1, dadurch gekennzeichnet, daß die Schweißlinien (7, 8) ein Gitternetzwerk auf dem Beschichtungsblatt (2) bilden.

5. Verfahren nach Anspruch 1, dadurch gekennzeichnet, daß man die Schweißlinien (3 - 8) mit Hilfe eines Elektronenstrahls herstellt.

6. Verfahren nach Anspruch 1, dadurch gekennzeichnet, daß man die Schweißlinien mit Hilfe eines fokussierten Laserstrahls herstellt.

7. Verfahren nach Anspruch 1, dadurch gekennzeichnet, daß das Beschichtungsblatt 2 aus rostfreiem Stahl besteht.

8. Verfahren nach Anspruch 7, dadurch gekennzeichnet, daß die Dicke des Blattes (2) aus rostfreiem Stahl zwischen 1 und 6 mm beträgt.

9. Verfahren nach Anspruch 8, dadurch gekennzeichnet, daß die Dicke des Blattes aus rostfreiem Stahl kleiner oder gleich 3 mm ist.

10. Verfahren nach einem der vorstehenden Ansprüche, dadurch gekennzeichnet, daß die Tiefe und die Verteilung der Schweißlinien (3 - 8) in Abhängigkeit von gewünschten Eigenschaften für das plattierte Blech bestimmt werden.

11. Verfahren nach einem der vorstehenden Ansprüche, dadurch gekennzeichnet, daß da Substrat aus Karbon-Mangan-Stahl besteht.

12. Plattiertes Blech mit einem Substrat (1), das mit einem Beschichtungsblatt (2) von geringerer Dicke überzogen ist, dadurch gekennzeichnet, daß die Verbindung zwischen dem Substrat (1) und dem Beschichtungsblatt (2) durch Schweißlinien (3 - 8) gebildet wird, die das Beschichtungsblatt (2) durchdringen und in das Substrat (1) eindringen, wobei die Schweißlinien (3-8) mit Hilfe eines Strahls mit hoher Energiedichte hergestellt sind.

13. Plattiertes Blech nach Anspruch 12, dadurch gekennzeichnet, daß die Schweißlinien (5) ein Netz aus parallel zum Längsrand des Bleches verlaufenden Linien bilden.

14. Plattiertes Blech nach Anspruch 12, dadurch gekennzeichnet, daß die Schweißlinien (7, 8) ein Gitternetzwerk auf dem Beschichtungsblatt bilden.

15. Plattiertes Blech nach den Ansprüchen 12 bis 14, dadurch gekennzeichnet, daß die Schweißlinien (4) unterbrochen sind.

16. Plattiertes Blech nach einem der Ansprüche 12 bis 15, dadurch gekennzeichnet, daß das Substrat (1) aus Standard-Stahl besteht.
